# EUROPÄISCHE PATENTSCHRIFT

(11) **EP 3 782 883 B1**
(45) Veröffentlichungstag und Bekanntmachung des Hinweises auf die Patenterteilung: **07.06.2023**
(21) Anmeldenummer: 20191056.9
(22) Anmeldetag: 14.08.2020
(51) Int. Cl.: B62J 1/00, B62J 1/22, B62J 1/26

(54) **FAHRRADSATTEL**
BICYCLE SADDLE
SELLE DE BICYCLETTE

(30) Priorität: 22.08.2019 DE 202019104601 U
(43) Veröffentlichungstag der Anmeldung: 24.02.2021
(73) Patentinhaber: Ergon International GmbH, 56070 Koblenz (DE)
(72) Erfinder: Krause, Andreas, 56068 Koblenz (DE); Arnold, Franc, 56068 Koblenz (DE)
(74) Vertreter: dompatent von Kreisler Selting Werner - Partnerschaft von Patent- und Rechtsanwälten mbB

(56) Entgegenhaltungen:
- EP-A1- 2 708 455
- EP-A1- 3 441 291
- EP-A1- 3 564 101
- WO-A1-2018/137971
- WO-A1-2018/225098
- CN-A- 104 773 232
- DE-U1-202005 007 672
- DE-U1-202005 013 749
- DE-U1-202008 018 006
- US-A1- 2015 130 234
- US-A1- 2015 191 209

## Beschreibung

Die Erfindung betrifft einen Fahrradsattel.

Fahrradsättel sind über ein an einer Unterseite einer Sattelschale angeordnetes Sattelgestell mit einer Sattelstütze verbunden. Auf der Oberseite der Sattelschale ist ein Sattelpolster zur Dämpfung angeordnet. Das Sattelpolster ist üblicherweise von einer Deckschicht oder einem Überzug bedeckt bzw. überspannt. Zur Verbesserung des Komforts von Fahrradsätteln besteht eine Vielzahl unterschiedlicher Ausgestaltungen von Fahrradsätteln. Beispielsweise sind innerhalb des Sitzpolsters Gelpads zur Verbesserung des Komforts angeordnet. Ebenso ist es bekannt, beispielsweise zwischen dem Sattelgestell und der Sattelschale insbesondere im Bereich der Sattelrückseite Dämpfungselemente vorzusehen. Die unterschiedlichsten Arten von Fahrradsätteln weisen häufig den Nachteil auf, dass der Komfort relativ gering ist und/oder die Sättel ein hohes Gewicht aufweisen.

Ein Fahrradsattel, mit dem eine sehr gute Verbesserung des Komforts erzielt werden kann, ist aus PCT/EP2018/062498 bekannt. Dieser Fahrradsattel weist zusätzlich zu einer herkömmlichen Sattelschale, an deren Unterseite das Sattelgestellt befestigt ist, eine zweite Sattelschale auf. Diese ist in einem Abstand zur unteren Sattelschale angeordnet, wobei zwischen den beiden Sattelschalen ein Polsterelement vorgesehen ist. Auf der Oberseite der oberen Sattelschale ist ein zweites Polsterelement vorgesehen. Durch einen derartigen zwei Sattelschalen aufweisenden Fahrradsattel kann die beim Treten auftretende Kippbewegung der Hüfte gut aufgenommen werden, da die obere Sattelschale gegenüber der unteren Sattelschale verkippt werden kann. Die Druckbelastung auf die Sitzknochen kann hierdurch deutlich reduziert werden. Mit einem derartigen Fahrradsattel kann der Sitzkomfort insbesondere bei einer relativ aufrechten Sitzposition deutlich verbessert werden. Wenngleich auch bei gebeugter Sitzposition mit diesem Fahrradsattel eine Verbesserung des Sitzkomforts erzielt werden kann, ist die Komfortverbesserung bei gebeugter Sitzposition weniger effektiv als in aufrechterer Sitzposition.

Ferner ist aus DE 20 2008 018 006 ein Sattel mit den Merkmalen des Oberbegriffs des Anspruchs 1 bekannt, wobei es sich bei der vorgesehenen Ausnehmung um eine durchgehende offene Ausnehmung handelt.

Dokument CN104773232A zeigt den Oberbegriff des Anspruchs 1.

Aufgabe der Erfindung ist es, einen Fahrradsattel mit guten Komforteigenschaften auch bei gebeugter Sitzposition zu schaffen.

Die Lösung der Aufgabe erfolgt erfindungsgemäß durch einen Fahrradsattel gemäß Anspruch 1.

Der erfindungsgemäße Fahrradsattel weist eine Sattelschale auf, an deren Unterseite ein Sattelgestell angeordnet ist. Das Sattelgestell dient zur Verbindung des Fahrradsattels mit einer Sattelstütze. Auf einer Oberseite der Sattelschale ist ein erstes Polsterelement angeordnet. Das erste Polsterelement bedeckt die Oberseite der Sattelschale vorzugsweise vollständig, wobei das Polsterelement aus mehreren einzelnen Polsterteilen gegebenenfalls aus unterschiedlichen Materialen hergestellt sein kann. Auf einer Oberseite des ersten Polsterelements ist eine Zwischenschale angeordnet. Die Zwischenschale ist wie auch die Sattelschale selbst aus einem härteren Kunststoff hergestellt, wobei die Zwischenschale und die Sattelschale nicht aus demselben Material hergestellt sein müssen. Auf einer Oberseite der Zwischenschale ist ein zweites Polsterelement angeordnet. Dieses bildet vorzugsweise die Oberseite des Sattels aus und weist somit die Abmessungen entsprechend des ersten Polsterelements bzw. der Sattelschale auf.

Erfindungsgemäß ist die Zwischenschale nicht durchgehend, sondern weist mindestens eine Ausnehmung auf. Durch Vorsehen einer derartigen Ausnehmung können die Dämpfungseigenschaften des Sattels verändert werden. Insbesondere kann durch geeignete Anordnung der mindestens einen Ausnehmung die Zwischenschale in einem mittleren Bereich des Sattels weicher ausgestaltet werden. In dem mittleren Bereich des Sattels tritt in gebeugter Sitzposition die Hauptbelastung auf. Bei gebeugter Sitzposition werden im mittleren Bereich des Sattels die größten Kräfte insbesondere auf den Dammbereich des Benutzers übertragen.

Durch das Vorsehen einer Zwischenschale mit Ausnehmungen kann ein Fahrradsattel mit zwei Sattelschalen, wie aus PCT/EP2018/062498 bekannt ist, hinsichtlich seines Komforts weiter verbessert werden. Zunächst kann durch die Zwischenschale, d.h. die obere der beiden Sattelschalen, die durch das untere Polster vollständig von der unteren Sattelschale getrennt ist, weiterhin beim Treten die Kippbewegung der Hüfte vom Sattel gut aufgenommen werden. Es erfolgt weiterhin entsprechend dem bekannten Sattel mit zwei Sattelschalen ein Verkippen der oberen Sattelschale bzw. der Zwischenschale gegenüber der unteren Sattelschale. Hierdurch ist der Komfort erheblich verbessert. Durch das zusätzliche Vorsehen der mindestens einen Ausnehmung in der Zwischenschale kann der Komfort weiter verbessert werden, da die Sattelschale flexibler ausgestaltet werden kann. Auch können je nach Art des Sattels eine oder auch mehrere unterschiedlich ausgebildete Ausnehmungen vorgesehen werden. Insbesondere bei einer gebeugten Sitzposition ist aufgrund der Ausnehmung eine gute Kippbewegung der Zwischenschale realisiert.

Erfindungsgemäß ist das erste und das zweite Polsterelement zumindest im Bereich der mindestens einen Ausnehmung miteinander verbunden oder die beiden Polsterelemente liegen in diesem Bereich zumindest einander an. Auch ist es möglich, aber nicht beansprucht, bei beispielsweise aufgeschäumten Polsterelementen diese gemeinsam herzustellen, so dass zumindest Teile des ersten und zweiten Polsterelements als einstückiges Polsterelement ausgebildet sind und die beiden Polsterelemente insbesondere über die mindestens eine Ausnehmung miteinander verbunden sind.

Vorzugsweise ist die Zwischenschale rahmenförmig ausgebildet. Insbesondere ist die Zwischenschale umlaufend ausgebildet und besonders bevorzugt in einem Randbereich der Polsterelemente angeordnet. Insbesondere kann die Zwischenschale derart angeordnet sein, dass ein äußerer Rand der Zwischenschale von außen sichtbar ist oder bis in den Randbereich des Sattels ragt.

In einer weiteren bevorzugten Ausführungsform ist die Zwischenschale nicht als geschlossener Rahmen ausgebildet. Die Zwischenschale ist jedoch zumindest derart ausgebildet, dass sie in dem seitlichen Bereich sowie auch in dem hinteren bzw. im Sitzbereich des Sattels angeordnet ist. Die Zwischenschale ist somit in Draufsicht U-förmig und insbesondere nur im Bereich der Sattelspitze nicht geschlossen.

Auch kann die Zwischenschale, unabhängig von der genauen Ausgestaltung der Zwischenschale, derart ausgebildet sein, dass die Zwischenschale insbesondere vollständig innerhalb der beiden Sattelpolster angeordnet ist und somit eine äußere Kante der Zwischenschale nicht sichtbar ist. Vielmehr ist die äußere Kante der Zwischenschale vorzugsweise einige Millimeter innerhalb des Sattels, d.h. in geringem Abstand zur Außenseite des Sattels innerhalb der und insbesondere zwischen den beiden Polsterelementen angeordnet. Hierdurch ist eine weiche Kante insbesondere im Seitenbereich des Sattels realisiert. In einem hinteren bzw. rückwärtigen Bereich des Sattels kann die Sattelschale wiederum sichtbar sein. Ein Verlagern der Sattelschale nach innen hat den Vorteil, dass das Eindringen von Feuchtigkeit in diesem Bereich zwischen der Sattelschale und dem Polsterelement vermieden ist.

Die mindestens eine Ausnehmung ist vorzugsweise derart ausgebildet, dass eine Ausnehmung in einem Sitzbereich und/oder dem Mittelbereich und/oder im Bereich der Sattelspitze vorgesehen ist. Hierbei kann es sich um einzelne Ausnehmungen handeln, wobei es bevorzugt ist, dass insbesondere im Sitzbereich und im Mittelbereich eine gemeinsame Ausnehmung vorgesehen ist, die sich in besonders bevorzugter Ausführungsform bis in den Bereich der Sattelspitze erstreckt. Besonders bevorzugt ist es somit, dass eine Ausnehmung vorgesehen ist, die sich vom Sitzbereich über den Mittelbereich in den Bereich der Sattelspitze erstreckt.

Die Ausnehmung ist in bevorzugter Ausführungsform von dem ersten und/oder zweiten Polsterelement überdeckt bzw. überspannt. Bevorzugt ist es insofern, dass die Ausnehmung nicht sichtbar ist, sondern innerhalb der beiden Polsterelemente, insbesondere einer Grenzfläche zwischen den beiden Polsterelementen angeordnet ist. Gegebenenfalls können die beiden Polsterelemente auch einstückig ausgebildet sein, so dass das Polsterelement vollständig durch die Ausnehmung hindurch ragt, so dass die Ausnehmung vollständig von dem Polsterelement ausgefüllt ist.

Gegebenenfalls können zusätzliche Ausnehmungen in dem diese zentrale Ausnehmung umgebenden Rand vorgesehen sein.

In besonders bevorzugter Ausführungsform ist die Zwischenschale derart ausgebildet, dass die mindestens eine Ausnehmung so angeordnet ist, dass die Sitzknochen des Benutzers stets oberhalb der Zwischenschale angeordnet sind. Insbesondere ist die Ausnehmung derart angeordnet, dass vermieden ist, dass die Sitzknochen in einem Randbereich der Zwischenschale angeordnet sind.

Durch eine derartige Ausgestaltung der Zwischenschale ist gewährleistet, dass der Sitzkomfort durch die Verkippmöglichkeit zwischen den beiden Schalen sehr gut ist.

Im Sitzbereich des Sattels weist die Ausnehmung vorzugsweise eine Breite von 40 bis 80%, insbesondere 50 bis 75% der Breite der Zwischenschale oder der Breite des Sattels in diesem Bereich auf. Die Öffnung weist im Sitzbereich vorzugsweise eine Breite von 2 bis 6 cm und der beidseitig neben der Ausnehmung vorgesehene Bereich der Zwischenschale eine Breite von 1,5 bis 3 cm auf. Hierbei ist je nach Satteltyp und Verwendungszweck des Sattels die Zwischenschale jedoch vorzugweise stets derart ausgebildet, dass die Sitzknochen des Benutzers über der Zwischenschale angeordnet sind.

Im Mittelbereich und/oder im Bereich der Sattelspitze weist die Ausnehmung eine Breite von vorzugsweise 40 bis 80%, insbesondere 50 bis 75% der Breite der Zwischenschale bzw. des Sattels in diesem Bereich auf. Im Mittelbereich und im Bereich der Sattelspitze weist die Ausnehmung eine Breite von 1 bis 2 cm und der jeweilige Rand 0,5 bis 1,5 cm auf.

Die Zwischenschale und insbesondere der gesamte Fahrradsattel ist zu einer in Längsrichtung verlaufenden Mittellinie symmetrisch ausgebildet.

Die Zwischenschale und/oder die Sattelschale sind vorzugsweise aus Kunststoff hergestellt und/oder weisen Kunststoff auf. Besonders bevorzugt ist hierbei die Verwendung von faserverstärktem Kunststoff. Besonders bevorzugt ist die Herstellung der Zwischenschale und/oder der Sattelschale aus Karbon. Vorzugsweise weist die Sattelschale ein Elastizitätsmodul von mindestens 3000 MPa, insbesondere mindestens 4000 MPa und besonders bevorzugt mindestens 6000 MPa auf. Besonders bevorzugt ist es, dass das Elastizitätsmodul der Zwischenschale geringer ist als das Elastizitätsmodul der Sattelschale. Das Elastizitätsmodul der Zwischenschale liegt vorzugsweise im Bereich von 1000 bis 3000 MPa. Vorzugsweise liegt das Elastizitätsmodul der Zwischenschale im Bereich von 30 bis 60%, insbesondere 40 bis 50% der Sattelschale.

Vorzugweise weist die Sattelschale und/oder die Zwischenschale eine Dicke von mindestens 1 bis 3 mm auf, wobei die Zwischenschale ggf. eine geringere Dicke als die Sattelschale aufweisen kann.

Die Sattelschale kann aus einem insbesondere faserverstärkten Kunststoffmaterial hergestellt sein. Die Sattelschale kann auch aus PA6, PP oder ähnlichen Materialien hergestellt sein. Die Zwischenschale kann insbesondere aus faserverstärktem Kunststoff hergestellt sein. Bevorzugt ist es, die Zwischenschale aus TPU herzustellen.

Die einzelnen Polsterelemente des Sattelpolsters können in bevorzugter Ausführungsform aus unterschiedlichen Materialien hergestellt sein, wobei es auch möglich ist, dass das Sattelpolster nur aus einem einzigen Polsterelement hergestellt ist. Bevorzugt ist es, dass zumindest eines der Polsterelemente, insbesondere das erste Polsterelement einen oder mehrere Partikelschäume aufweist, insbesondere aus einem oder mehreren Partikelschäumen hergestellt ist. Besonders bevorzugt ist es, das Sattelpolster, einzelne Polsterelemente und insbesondere das erste Polsterelement aus E-TPU (expandiertes thermoplastisches Polyurethan) herzustellen, wobei das entsprechende Sattelpolster bzw. Polsterelement E-TPU zumindest aufweist.

Besonders geeignet ist hierfür das von der Firma BASF unter dem Produktnamen "Infinergy" hergestellte Material. Verfahren zur Herstellung von TPU sind beispielsweise in EP 692 510, WO 00/44821, EP 11 74 459 und EP 11 74 458 beschrieben. Ferner kann das Sattelpolster bzw. einzelne Polsterelemente aus EVA (Ethylenvinylacetat) hergestellt sein, bzw. EVA aufweisen. Ferner können als Materialien EPP (expandiertes Polypropylen) und EPE (expandiertes Polyethylen) verwendet werden. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des mindestens einen Polsterelements erzielt werden. Auch ist es möglich, die entsprechenden Materialien in unterschiedlichen Bereichen stärker zu verdichten, so dass hierdurch die Dämpfungs- und Bewegungseigenschaften beeinflusst werden können.

Des Weiteren ist als Material für das mindestens eine Polsterelement ein thermoplastischer elastomerer Kugelschaum geeignet. Ein derartiger Schaum wird von der Firma Sekisui unter dem Produktnamen "ELASTIL" angeboten. Dabei handelt es sich insbesondere um einen geschlossenzelligen Schaum. In bevorzugter Ausführungsform weist das mindestens eine Polsterelement erfindungsgemäß einen thermoplastischen elastomeren Kugelschaum wie insbesondere Elastil auf oder ist aus diesem hergestellt. Möglich ist auch eine Kombination mit den anderen beschriebenen, für die Ausbildung des mindestens einen Polsterelements geeigneten Materialien.

Ein weiteres gut geeignetes Material zur Ausbildung des mindestens einen Polsterelements ist ein Polyester-basiertes PU-Material. Besonders geeignet ist hierbei das von der Firma BASF unter dem Markennamen "Elastopan" angebotene Material. Vorzugsweise weist das mindestens eine Polsterelement ein derartiges Material auf oder ist aus diesem hergestellt, wobei es wiederum möglich ist, dieses Material mit anderen beschriebenen Materialien zu kombinieren.

Besonders bevorzugt ist es, dass das mindestens eine Polsterelement einen oder mehrere Partikelschäume aufweist und insbesondere aus einem oder mehreren Partikelschäumen hergestellt ist. Als Grundmaterial sind hierbei E-TPU, EPP, EPE oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Des Weiteren ist es möglich, ein Verschmelzen bzw. Verbinden der Kügelchen bzw. Partikel durch Energiezufuhr, insbesondere in Form von Radiowellen, durchzuführen. Ein derartiges RF-Verfahren hat insbesondere den Vorteil, dass ein Trocknen des Bauteils nicht erforderlich ist und das Bauteil insofern unmittelbar weiterverarbeitet werden kann. Partikelschäume haben insbesondere den Vorteil, dass sie eine geringe Dichte, eine gute Wärme-/Kälteisolation und gute Dämpfungseigenschaften aufweisen.

Des Weiteren ist es besonders bevorzugt, dass das mindestens eine Polsterelement aufgrund seiner geringen Dichte ein geringes Gewicht aufweist. Insbesondere weist das mindestens eine Polsterelement eine Dichte von weniger als 1 g/cm³, besonders bevorzugt weniger als 0,5 g/cm³, und insbesondere weniger als 0,2 g/cm³ auf. Eines der besonders bevorzugten Materialien, das Material Elastil, weist eine Dichte im Bereich von 0,05 bis 0,2 g/cm³ auf.

Das Reboundverhalten des mindestens einen Polsterelements liegt vorzugsweise im Bereich von vorzugsweise mehr als 30%, insbesondere mehr als 40% und besonders bevorzugt mehr als 50% auf.

Nachfolgend wird die Erfindung anhand einer bevorzugten Ausführungsform unter Bezugnahme auf die anliegenden Zeichnungen näher erläutert.

Es zeigen:

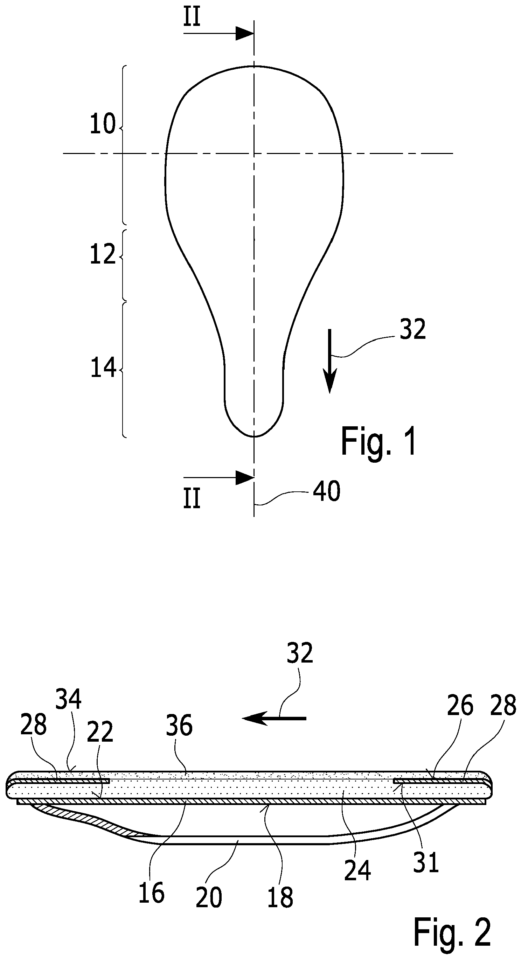

- Figur 1: eine schematische Draufsicht eines Fahrradsattels,
- Figur 2: eine schematische Schnittansicht des Fahrradsattels in Längsrichtung entlang der Linie II - II in Fig. 1,
- Figur 3: eine schematische Schnittansicht eines alternativen Fahrradsattels in Längsrichtung entsprechend dem in Fig. 2 dargestellten Fahrradsattel, und
- Figur 4: eine schematische Draufsicht einer Zwischenschale.

Ein Fahrradsattel weist einen Sitzbereich 10 auf, an dem sich ein Mittelbereich 12 und ein Bereich der Sattelspitze 14 anschließt. Bei einer eher aufrechten Sitzposition sind die Sitzknochen im Wesentlichen im Sitzbereich 10 angeordnet. Je gebeugter die Sitzposition ist, desto weiter wandern die Druckpunkte in den Mittelbereich 12 oder gar auch in den Bereich der Sattelspitze 14.

Der Fahrradsattel weist eine Sattelschale 16 auf, an deren Unterseite 18 ein Sattelgestell 20 angeordnet ist. Das Sattelgestell 20 dient zur Verbindung mit einer Sattelstütze. An einer Oberseite 22 der Sattelschale 16 ist ein erstes Polsterelement 24 vorgesehen. Auf einer Oberseite 26 des ersten Polsterelements 24 ist eine Zwischenschale 28 angeordnet, so dass eine Unterseite 31 der Zwischenschale 28 an der Oberseite 26 des ersten Polsterelements 24 anliegt. Die Sattelschale 28 weist im dargestellten Ausführungsbeispiel eine Ausnehmung 30 auf, die sich in Längsrichtung bzw. in Fahrtrichtung 32 erstreckt.

Auf der Oberseite 34 der Zwischenschale 28 ist ein zweites Polsterelement 36 angeordnet, wobei das zweite Polsterelement 36 in die Ausnehmung 30 ragt, so dass sich die beiden Polsterelemente 24, 36 im Bereich der Ausnehmung 30 berühren bzw. aneinander anliegen. Gegebenenfalls **,** aber nicht beansprucht, können die beiden Polsterelemente 24, 36 auch einstückig ausgebildet und insbesondere gemeinsam hergestellt sein.

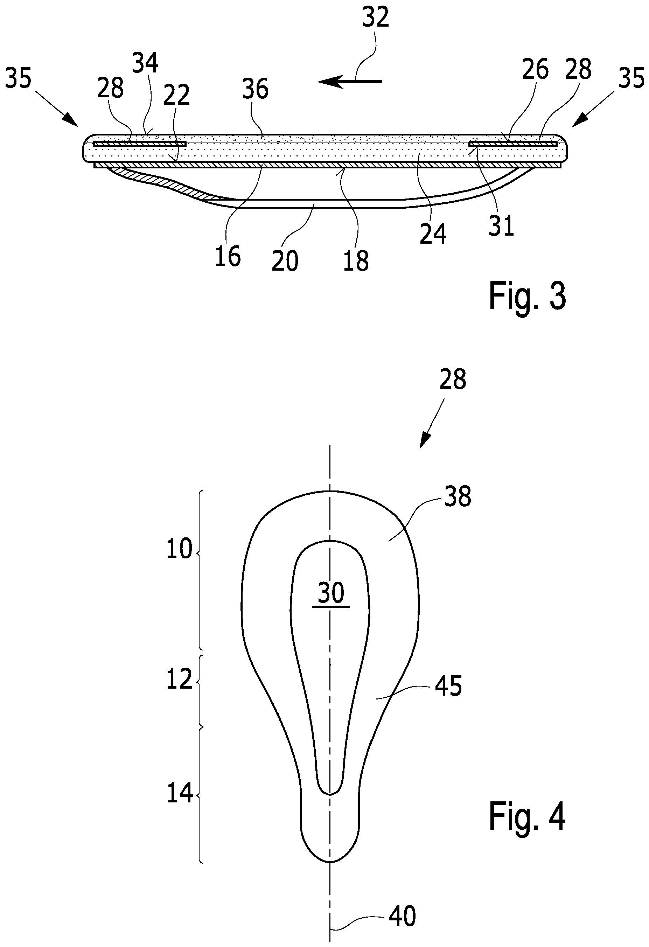

Bei der alternativen, in Fig. 3 dargestellten Ausführungsform des Fahrradsattels sind ähnliche und identische Bauteile mit denselben Bezugszeichen gekennzeichnet.

Der einzige wesentliche Unterschied besteht darin, dass die Zwischenschale 28 nicht bis in den Randbereich des Sattels ragt. Insofern ragt die Zwischenschale 28 nicht bis in den Randbereich 35. Vielmehr liegen in diesem Randbereich die beiden Polsterelemente 24, 36 unmittelbar aufeinander auf, so dass eine weichere Kante ausgebildet ist. Eine derartige Ausgestaltung ist nicht nur, wie in Fig. 3 dargestellt, im Bereich der Sattelspitze 14 sowie im rückwärtigen Bereich des Sattels vorteilhaft, sondern insbesondere auch im Seitenbereich vorteilhaft, da hier die Innenseite der Oberschenkel des Benutzers am Sattel anliegt.

Die Ausnehmung 30 weist, wie in Figur 4 ersichtlich, unterschiedliche Bereiche auf. So ist es bevorzugt, dass die Ausnehmung 30 im Sitzbereich 10 breiter ist als im Mittelbereich 12 und im Bereich der Sattelspitze 14. Des Weiteren ist es bevorzugt, wie im Ausführungsbeispiel dargestellt, dass ein Randbereich 38 im Sitzbereich 10 breiter ist als ein Randbereich 45 im Mittelbereich 12. Durch entsprechende Ausgestaltung der Breite der Randbereiche kann der Komfort und die Elastizität eingestellt werden. Diese kann zusätzlich durch die Art des verwendeten Materials und/oder die Materialdicke eingestellt werden.

Die Zwischenschale 28, wie vorzugsweise auch der gesamte Sattel, sind zu einer Mittellinie 40, die in Fahrtrichtung 32 verläuft, symmetrisch.

## Patentansprüche

1. Fahrradsattel mit
einer Sattelschale (16),
einem an einer Unterseite (18) der Sattelschale (16) angeordneten Sattelgestell (20),
einem auf einer Oberseite (22) der Sattelschale (16) angeordneten ersten Polsterelement (24),
einem direkt auf einer Oberseite (26) des ersten Polsterelements (24) angeordneten Zwischenschale (28) und
einem auf einer Oberseite (34) der Zwischenschale (28) angeordneten zweiten Polsterelement (36),
wobei die Zwischenschale (28) mindestens eine Ausnehmung (30) aufweist,
**dadurch gekennzeichnet, dass**
sich das erste und zweite Polsterelement (24, 36) in der mindestens einen Ausnehmung (30) berühren .

2. Fahrradsattel nach Anspruch 1, **dadurch gekennzeichnet, dass** das erste und zweite Polsterelement (24, 36) im der mindestens einer Ausnehmung (30) miteinander verbunden sind.

3. Fahrradsattel nach Anspruch 1 oder 2, **dadurch gekennzeichnet, dass** die Zwischenschale (28) rahmenförmig ausgebildet und insbesondere in einem Randbereich der Polsterelemente (24, 36) angeordnet ist.

4. Fahrradsattel nach einem der Ansprüche 1 - 3, **dadurch gekennzeichnet, dass** die Ausnehmung (30) in einem Sitzbereich (10) und/oder in einem Mittelbereich (12) und/oder im Bereich einer Sattelspitze vorgesehen ist.

5. Fahrradsattel nach einem der Ansprüche 1 - 4, **dadurch gekennzeichnet, dass** die Ausnehmung (30) sich vom Sitzbereich (10) in den Mittelbereich (12) und vorzugsweise bis in den Bereich (14) der Sattelspitze erstreckt.

6. Fahrradsattel nach einem der Ansprüche 1 - 5, **dadurch gekennzeichnet, dass** die Ausnehmung (30) eine Breite von 40 bis 60%, insbesondere 50 bis 75% der Breite der Zwischenschale (28) im Sitzbereich (10) und/oder im Mittelbereich (12) und/oder im Bereich (14) der Sattelspitze aufweist.

7. Fahrradsattel nach einem der Ansprüche 1 - 6, **dadurch gekennzeichnet, dass** die Zusatzschale (28) zu einer Längsachse (40) symmetrisch ist.

8. Fahrradsattel nach einem der Ansprüche 1 - 7, **dadurch gekennzeichnet, dass** die Ausnehmung (30) von dem ersten Polsterelement (24) und/oder von dem zweiten Polsterelement (36) vollständig überspannt ist.

## Claims

1. Bicycle saddle comprising
a saddle shell (16),
a saddle frame (20) arranged on a lower side (18) of the saddle shell (16),
a first cushion element (24) arranged on the upper side (22) of the saddle shell (16),
an intermediate shell (28) immediately arranged on an upper side (26) of the first cushion element (24) and
a second cushion element (36) arranged on an upper side (34) of the intermediate shell (28),
wherein the intermediate shell (28) comprises at least one recess (30)
**characterized in that**
the first and second cushion elements (24, 36) contact each other in the at least one recess (30).

2. Bicycle saddle of claim 1, **characterized in that** the first and second cushion elements (24, 36) are connected to each other in the at least one recess (30).

3. Bicycle saddle of claim 1 or 2, **characterized in that** the intermediate shell (28) is formed in a frame-shaped design and is arranged in particular in an edge region of the cushion elements (24, 36).

4. Bicycle saddle of one of claims 1 - 3, **characterized in that** the recess (30) is provided in a sitting region (10) and/or in a central region (12) and/or in the region of a saddle tip.

5. Bicycle saddle of one of claims 1 - 4, **characterized in that** the recess (30) extends from the sitting region (10) into the central region (12) and preferably into the region (14) of the saddle tip.

6. Bicycle saddle of one of claims 1 - 5, **characterized in that** the recess (30) has a width of 40 to 60%, in particular 50 to 75% of the width of the intermediate shell (28) in the sitting region (10) and/or in the central region (12) and/or in the region (14) of the saddle tip.

7. Bicycle saddle of one of claims 1 - 6, **characterized in that** the additional shell (28) is symmetric with respect to a longitudinal axis (40).

8. Bicycle saddle of one of claims 1 - 7, **characterized in that** the recess (30) is completely spanned by the first cushion element (24) and/or the second cushion element (36).

## Revendications

1. Selle de bicyclette dotée
d'une coque de selle (16),
d'un rail de selle (20) disposé sur une face inférieure (18) de la coque de selle (16),
d'un premier élément de rembourrage (24) disposé sur une face supérieure (22) de la coque de selle (16),
d'une coque intermédiaire (28) disposée directement sur une face supérieure (26) du premier élément de rembourrage (24) et
d'un deuxième élément de rembourrage (36) disposé sur une face supérieure (34) de la coque intermédiaire (28),
dans laquelle la coque intermédiaire (28) comporte au moins un évidement (30),
**caractérisée en ce que**
le premier et le deuxième élément de rembourrage (24, 36) se touchent dans l'au moins un évidement (30).

2. Selle de bicyclette selon la revendication 1, **caractérisée en ce que** le premier et le deuxième élément de rembourrage (24, 36) sont reliés l'un à l'autre dans l'au moins un évidement (30).

3. Selle de bicyclette selon la revendication 1 ou 2, **caractérisée en ce que** la coque intermédiaire (28) est réalisée sous forme de cadre et est en particulier disposée dans une zone de bord des éléments de rembourrage (24, 36).

4. Selle de bicyclette selon l'une des revendications 1 - 3, **caractérisée en ce que** l'évidement (30) est prévu dans une zone d'assise (10) et/ou dans une zone médiane (12) et/ou dans la zone d'un bec de selle.

5. Selle de bicyclette selon l'une des revendications 1 - 4, **caractérisée en ce que** l'évidement (30) s'étend de la zone d'assise (10) jusque dans la zone médiane (12) et de préférence jusque dans la zone (14) du bec de selle.

6. Selle de bicyclette selon l'une des revendications 1 - 5, **caractérisée en ce que** l'évidement (30) comporte une largeur valant de 40 à 60 %, en particulier de 50 à 75 % de la largeur de la coque intermédiaire (28) dans la zone d'assise (10) et/ou dans la zone médiane (12) et/ou dans la zone (14) du bec de selle.

7. Selle de bicyclette selon l'une des revendications 1 - 6, **caractérisée en ce que** la coque additionnelle (28) est symétrique par rapport à un axe longitudinal (40).

8. Selle de bicyclette selon l'une des revendications 1 - 7, **caractérisée en ce que** l'évidement (30) est entièrement recouvert par le premier élément de rembourrage (24) et/ou par le deuxième élément de rembourrage (36).
